# EUROPÄISCHE PATENTSCHRIFT

(11) **EP 3 714 993 B1**
(45) Veröffentlichungstag und Bekanntmachung des Hinweises auf die Patenterteilung: **08.12.2021**
(21) Anmeldenummer: 19166092.7
(22) Anmeldetag: 29.03.2019
(51) Int. Cl.: B05C 5/02, F16K 41/10, F16K 27/02

(54) **VORRICHTUNG ZUM AUSGEBEN EINES FLIESSFÄHIGEN MEDIUMS**
DEVICE FOR OUTPUTTING A MEDIUM CAPABLE OF FLOW
DISPOSITIF DE DISTRIBUTION D'UN MILIEU COULANT

(43) Veröffentlichungstag der Anmeldung: 30.09.2020
(73) Patentinhaber: Robatech AG, 5630 Muri (CH)
(72) Erfinder: INEICHEN, Beatus, 6353 Weggis (CH)
(74) Vertreter: Franke, Markus

(56) Entgegenhaltungen:
- DE-B3-102015 000 630
- GB-A- 2 194 822
- US-A1- 2015 076 177

## Beschreibung

Die vorliegende Erfindung betrifft eine Vorrichtung zum Ausgeben eines fließfähigen Mediums, wobei es sich bei dem fließfähigen Medium vorzugsweise um einen Klebstoff, insbesondere einen Heißkleber oder Schmelzklebstoff handelt.

Vorrichtungen zum Ausgeben eines fließfähigen Mediums werden zum Beispiel dafür verwendet, portionsweise fließfähiges Medium auf ein Substrat aufzubringen. Die Auftragung des fließfähigen Mediums erfolgt dabei in der Regel gesteuert, wobei die Vorrichtung eine Ausgabeöffnung zum Ausgeben des fließfähigen Mediums aufweist, wobei diese Ausgabeöffnung mittels eines Dichtabschnitts einer mit einem Aktuator bewegbaren Stange geschlossen und geöffnet werden kann. Insofern weist eine derartige Vorrichtung ein verschließbares Ventil auf. Eine Vorrichtung zum Ausgeben eines fließfähigen Mediums kann auch als Druckregelventil, Überdruckventil oder als Drossel ausgebildet sein. Bei einer Ausbildung als Drossel bleibt während laufendem Betrieb die Ausgabeöffnung dauernd geöffnet. Die Ausführung als Druckregelventil oder Überdruckventil zur Begrenzung von einem Druck kann ein Sicherheitselement sein, wobei im Normalfall die Ausgabeöffnung geschlossen ist und sehr selten geöffnet, um die Funktion der Druckbegrenzung zu erzielen.

Hinsichtlich derartiger Vorrichtungen zum Ausgeben eines fließfähigen Mediums der vorgenannten Art besteht eine besondere Problematik darin, zu verhindern, dass das fließfähige Medium in den Bereich des Aktuators oder in den Bereich eines Lagerabschnitts der Vorrichtung für die Stange gelangt. Um den Aktuator und/oder den Lagerabschnitt gegenüber dem fließfähigen Medium, insbesondere eine das fließfähige Medium aufnehmenden Kavität abzudichten, werden Dichtungen verwendet, wobei zu diesem Zweck grundsätzlich zwei unterschiedliche Arten von Dichtungen bekannt sind.

Zum einen eine sogenannte "dynamische Dichtung", wobei bei einer dynamischen Dichtung beim Betrieb der Vorrichtung die Dichtung bzw. das Dichtelement zwischen zwei sich relativ zueinander bewegenden Oberflächen ausgebildet bzw. angeordnet ist. Ein Nachteil bei dieser Art der Abdichtung ist, dass beim Langzeitbetrieb der Vorrichtung die dynamische Dichtung abgenutzt wird und infolge dessen die Dichtung ihre Dichtwirkung verliert, wodurch es zu ungewünschtem Eindringen von fließfähigem Medium in den Bereich des Aktuators und/oder des Lagerabschnitts kommen kann. Ein bekannter Nachteil von dynamischen Dichtungen ist neben dem unweigerlichen Verschleiß die fehlende Leckagefreiheit. Das bedeutet, bei jedem Doppelhub der Stange passiert permanent eine bestimmte Menge des fließfähigen Mediums den Dichtbereich. Dabei handelt es sich um sehr geringe Mengen, welche mit zunehmendem Verschleiß der Dichtung größer werden. Dynamische Dichtungen haben zudem die Eigenart, dass sich diese nach längerem Stillstand festsetzen können. Dabei kann das stehende fließfähige Medium um den Gleitbereich der Dichtung verkleben und ein Gleiten behindern oder unmöglich machen. Bei Verwendung einer derartigen Vorrichtung zum Ausgeben eines fließfähigen Mediums als Sicherheitselement, beispielsweise als Überdruckventil, kann dies zu einem Versagen des Ventils führen und somit wäre die Sicherheitsfunktion nicht gewährleistet.

Des Weiteren sind aus dem Stand der Technik sogenannte "statische Dichtungen", insbesondere in Form von Balgdichtungen, bekannt. Im Gegensatz zu einer dynamischen Dichtung erfolgt bei einer Balgdichtung die Abdichtung nicht zwischen zwei sich gegeneinander bewegenden Flächen, sondern die Balgdichtung ist mit einem ersten Abschnitt mit der Stange statisch verbunden und mit einem zweiten Abschnitt statisch mit einem weiteren Element der Vorrichtung verbunden, wobei sich die Stange relativ zu dem zweiten Element der Vorrichtung bewegt. Typischerweise handelt es sich bei dem zweiten Element um einen Teilbereich des Gehäuses. Die Bewegung der Stange gegenüber dem Element der Vorrichtung wird durch eine Verformung der Balgdichtung aufgenommen, wobei die Balgdichtung zu diesem Zweck üblicherweise einen Ausgleichsabschnitt zum Ausgleichen einer axialen Stauchung oder Streckung der Balgdichtung aufweist. Bei einer Faltenbalgdichtung wird dieser Ausgleichsabschnitt beispielsweise durch eine Falte gebildet. Bei einer statischen Dichtung, insbesondere in Form einer Balgdichtung, ist eine sehr hohe Dichtheit auch bei einem Langzeitbetrieb der Vorrichtung gewährleistet, da an der Dichtung nur geringe Reibungskräfte auftreten.

Vorrichtungen zum Ausgeben eines fließfähigen Mediums, welche zwecks Abdichtung eine Balgdichtung aufweisen, sind beispielsweise aus der EP 2 308 602 A2, der US 2006/0097015 A1 sowie der DE 10 2015 000 630 B3 bekannt, wobei Letztere die Merkmale des Oberbegriffs des Patentanspruchs 1 aufweist. Die DE 10 2015 000 630 B3 offenbart eine Vorrichtung zum Ausgeben eines fließfähigen Mediums aufweisend:
- ein Gehäuse mit einer Kavität zur Aufnahme des fließfähigen Mediums,
- eine in einem Lagerabschnitt des Gehäuses gelagerte Stange, wobei die Stange mittels eines Aktuators zwischen einer ersten Endstellung und einer zweiten Endstellung in einer axialen Richtung und umgekehrt bewegbar ist,
- eine in die Kavität mündende Ausgabeöffnung zum Ausgeben des fließfähigen Mediums, wobei die Stange einen Dichtabschnitt aufweist, wobei der Dichtabschnitt in der ersten Endstellung die Ausgabeöffnung verschließt und in der zweiten Endstellung beabstandet von der Ausgabeöffnung angeordnet ist,
- eine Balgdichtung zur Abdichtung des Lagerabschnitts gegen die Kavität, wobei die Stange die Balgdichtung durchsetzt, wobei die Balgdichtung abgedichtet an der Stange und abgedichtet an dem Gehäuse gelagert ist, wobei ein erster Abschnitt der Balgdichtung bezüglich der Stange ortsfest mit der Stange verbunden ist und ein zweiter Abschnitt der Balgdichtung bezüglich des Gehäuses ortsfest mit dem Gehäuse verbunden ist, wobei die Balgdichtung zumindest einen Ausgleichsabschnitt zum Ausgleichen einer axialen Stauchung oder Streckung der Balgdichtung aufweist, wobei der Ausgleichsabschnitt radial gegenüber angrenzenden Bereichen der Balgdichtung hervorsteht,
- zumindest einen in die Kavität mündenden Kanal durch den das fließfähige Medium in die Kavität einströmen kann.

Bei einer Vorrichtung mit einer Balgdichtung, wie sie beispielsweise aus der DE 10 2015 000 630 B3 bekannt ist, besteht die Problematik, dass in der Kavität Bereiche vorhanden sind, in denen kein Austausch des fließfähigen Mediums oder kaum Austausch des fließfähigen Mediums stattfindet, sodass sich in diesen Bereichen sogenannte Toträume bilden. Bei diesen Toträumen besteht die Problematik, dass aufgrund des fehlenden Austauschs des fließfähigen Mediums in diesem Bereich das dort vorhandene fließfähige Medium seine Eigenschaften, wie beispielsweise Fließeigenschaften oder Klebeigenschaften, ändert, beispielsweise Schmelzklebstoff oxidiert und/oder altert und dadurch fest wird oder seine Konsistenz ändert oder das fließfähige Medium aufgrund des Eintrags von Fremdstoffen fest wird. Dementsprechend sind derartige Toträume unerwünscht und sollten vermieden werden. Die Problematik von derartigen Toträumen besteht insbesondere bei Balgdichtungen, insbesondere bei Faltenbalgdichtungen, da der Ausgleichsabschnitt, welcher sich in der Kavität befindet, aufgrund seiner radialen Ausdehnung den Austausch von fließfähigem Medium in Bereichen der Kavität behindert, und insbesondere auf einer der Ausgabeöffnung abgewandten Seite des Ausgleichsabschnitts ein ausreichender Austausch von fließfähigem Medium behindert ist.

Aufgabe der vorliegenden Erfindung ist es daher, eine Vorrichtung, die die Merkmale des Oberbegriffs des Patentanspruchs 1 aufweist, derart weiterzubilden, dass eine Bildung von Toträumen in dem Bereich der Kavität vermieden wird.

Gelöst wird diese Aufgabe durch eine Vorrichtung, die die Merkmale des geltenden Patentanspruchs 1 aufweist.

Zwecks Vermeidung von Toträumen im Bereich der Kavität ist vorgesehen, dass eine Projektion einer Mittelachse eines in die Kavität mündenden Kanalabschnitts des zumindest einen Kanals auf eine senkrecht zu der axialen Richtung ausgebildeten Projektionsebene eine Kreistangente eines konzentrisch zu der Stange ausgebildeten Kreises bildet.

Durch diese Gestaltung des Kanals, konkret des Kanalabschnitts, wird das durch den Kanal einströmende fließfähige Medium derart in die Kavität eingeleitet, dass das fließfähige Medium tangential in die Kavität einströmt, wodurch Toträume vermieden werden, wie sie beispielsweise bei einem radialen Einströmen in Richtung der Stange auftreten würden.

Abhängig von der Viskosität und den Strömungseigenschaften des fließfähigen Mediums kann bei einer derartigen Gestaltung des Kanalabschnitts insbesondere die Bildung einer rotatorischen Strömung oder von Wirbelströmungen in der Kavität begünstigt werden, was sich wiederum vorteilhaft auf die Vermeidung von Toträumen auswirkt.

Als besonders vorteilhaft wird es angesehen, wenn die Balgdichtung eine Faltenbalgdichtung ist und eine Falte der Faltenbalgdichtung den Ausgleichsabschnitt bildet.

Vorzugsweise weist die Balgdichtung mehrere axial beabstandet angeordnete Ausgleichsabschnitte auf.

Der Hubweg, das heißt der axiale Abstand zwischen der ersten Endstellung und der zweiten Endstellung der Stange, liegt vorzugsweise im Bereich von 0,05 mm bis 10 mm, insbesondere im Bereich von 0,05 mm bis 1 mm. Bei Bereichen oberhalb von 1 mm wird eine Balgdichtung mit mehreren axial beabstandeten Ausgleichsabschnitten bevorzugt.

Es ist durchaus denkbar und bevorzugt, dass die Vorrichtung mehrere in die Kavität mündende Kanäle aufweist, durch die das fließfähige Medium in die Kavität einströmen kann, wobei eine Projektion der Mittelachse des in die Kavität mündenden Kanalabschnitts des jeweiligen Kanals auf die senkrecht zu der axialen Richtung ausgebildete Projektionsebene eine Kreistangente eines konzentrisch zu der Stange ausgebildeten Kreises bildet.

In diesem Zusammenhang wird es als besonders vorteilhaft angesehen, wenn die Mittelachse des in die Kavität mündenden Kanalabschnitts eines ersten Kanals eine Kreistangente eines ersten Kreises bildet und die Mittelachse des in die Kavität mündenden Kanalabschnitts eines zweiten Kanals eine Kreistangente eines zweiten Kreises bildet, wobei die beiden Kreise nicht identisch sind, insbesondere die beiden Kreise unterschiedliche Kreisdurchmesser aufweisen. Dies wirkt sich wiederum vorteilhaft auf die Vermeidung von Toträumen aus.

Vorzugsweise sind die Kanalabschnitte der Kanäle in der axialen Richtung in derselben Ebene angeordnet.

Es wird als vorteilhaft angesehen, wenn die Kanalabschnitte axial beabstandet angeordnet sind, insbesondere wenn die Vorrichtung mehrere axial beabstandet angeordnete Ausgleichsabschnitte, insbesondere mehrere axial beabstandete Falten, aufweist.

Um auf der gesamten Erstreckung der Kavität in der axialen Richtung eine Strömung zu erzwingen, respektive die Kavität totraumfrei zu gestalten, wird es als vorteilhaft angesehen, wenn die Vorrichtung zumindest zwei Kanäle aufweist, wobei die Kanalabschnitte der Kanäle sowohl in der axialen Richtung beabstandet sind als auch in der radialen Richtung beabstandet sind.

Es ist aber auch durchaus denkbar, dass die Kanalabschnitte der Kanäle in der axialen Richtung in derselben Ebene angeordnet sind.

Als besonders vorteilhaft wird es angesehen, wenn die Kanalabschnitte drehsymmetrisch, insbesondere radiärsymmetrisch angeordnet sind.

In einer bevorzugten Ausführungsform ist vorgesehen, dass zumindest ein Teilbereich des Kanalabschnitts oder des jeweiligen Kanalabschnitts auf einer der Ausgabeöffnung abgewandten Seite einer durch einen radial äußeren Bereich des Ausgleichsabschnitts gebildeten Ebene ausgebildet ist. Bei einer derartigen Gestaltung wird ein Austausch des fließfähigen Mediums auf einer der Ausgabeöffnung abgewandten Seite des Ausgleichsabschnitts begünstigt, insofern die Bildung von Toträumen in diesem Bereich vermieden.

In einer besonders bevorzugten Ausführungsform der Erfindung ist vorgesehen, dass die Mittelachse des Kanalabschnitts oder des jeweiligen Kanalabschnitts gewinkelt zu der axialen Richtung verläuft, wobei ein zwischen der Mittelachse und der axialen Richtung eingeschlossener Winkel bevorzugt 70° bis 110° beträgt, vorzugsweise 85° bis 95° beträgt, insbesondere 90° beträgt.

Als besonders vorteilhaft hinsichtlich eines besonders günstigen Einströmens und einer besonders einfachen Fertigung ist vorgesehen, dass der Kanalabschnitt oder der jeweilige Kanalabschnitt einen kreisförmigen Querschnitt aufweist.

Ferner wird es als vorteilhaft angesehen, wenn der Kanal oder der jeweilige Kanal geradlinig ausgebildet ist.

Vorzugsweise ist die Balgdichtung formschlüssig und/oder kraftschlüssig in der Stange und/oder dem Gehäuse gehalten.

Als besonders vorteilhaft wird es angesehen, wenn der erste Abschnitt der Balgdichtung klemmend in der Stange gehalten ist.

In diesem Zusammenhang wird es als besonders vorteilhaft angesehen, wenn die Stange einen radialen Vorsprung aufweist, wobei der erste Abschnitt der Balgdichtung zwischen diesem radialen Vorsprung und einem mit der Stange verbundenen Klemmelement klemmend gehalten ist. Das Klemmelement kann beispielsweise auf die Stange aufschraubbar sein. Bei dem Klemmelement kann es sich beispielsweise um eine Hülse handeln.

Als besonders vorteilhaft wird es angesehen, wenn der erste Abschnitt und/oder der zweite Abschnitt als Wulst ausgebildet sind.

Der Ausgleichsabschnitt weist vorzugsweise eine Wandstärke von 0,5 mm bis 2 mm, vorzugsweise von 0,9 mm bis 1,1 mm, auf.

Vorzugsweise ist die Balgdichtung rotationssymmetrisch ausgebildet.

Als besonders vorteilhaft hinsichtlich der Langzeitstabilität, der chemischen Beständigkeit und der Dichtwirkung wird es angesehen, wenn die Balgdichtung einen Thermoplast aufweist, insbesondere aus einem Thermoplast besteht.

Zudem weist ein Thermoplast typischerweise eine höhere Temperaturbeständigkeit auf, sodass eine Balgdichtung, die einen Thermoplast aufweist bzw. aus einem Thermoplast besteht, auch für fließfähige Medien mit einer höheren Temperatur, beispielsweise oberhalb von 120° C, insbesondere einer Temperatur oberhalb von 185°C, bevorzugt einer Temperatur oberhalb von 200°C beständig ist, welches typische Verarbeitungstemperaturen von Schmelzklebstoffen sind. Der Bereich von 120°C bis 185°C ist der bevorzugte Temperaturbereich für Schmelzklebstoffe. Die Temperatur des fließfähigen Mediums kann im Bereich zwischen 0°C bis 220°C liegen. Bevorzugt liegt die Temperatur zwischen 20°C und 200°C und besonders bevorzugt zwischen 120°C und 185°C.

Bei dem Thermoplast handelt es sich vorzugsweise um MFA (Perfluormethylalkoxy), PFA (Perfluoralkoxy), FEP (Fluorethylenpropylen), PTFE (Polytetrafluorethylen), PEEK (Polyetheretherketon), oder PI (Polyimide).

Die Verwendung eines der vorgenannten Thermoplaste hat gegenüber einem Elastomer-Werkstoff den Vorteil, dass diese Thermoplaste im Gegensatz zu einem Elastomer-Werkstoff chemisch stabiler sind, insbesondere gegenüber aromatischen Kohlenwasserstoffen. Zudem hat sich gezeigt, dass mit einem der vorgenannten Thermoplaste im Gegensatz zu den üblichen Elastomer-Werkstoffen eine bessere, insbesondere dichtere kraftschlüssige und/oder formschlüssige Verbindung hergestellt werden kann. Neben den vorgenannten Thermoplasten sind aber auch andere Thermoplaste denkbar, welche eine ausreichend hohe chemische Beständigkeit gegen das verwendete fließfähige Medium aufweisen.

In einer vorteilhaften Weiterbildung der Vorrichtung ist vorgesehen, dass der Kreis oder der jeweilige Kreis einen Durchmesser aufweist, wobei die Kavität in der Projektionsebene eine Abmessung aufweist, wobei ein Verhältnis des Durchmessers des Kreises zu der Abmessung 0,2 bis 0,99, vorzugsweise 0,2 bis 0,95, bevorzugt 0,3 bis 0,9, besonders bevorzugt 0,4 bis 0,8, insbesondere 0,5 bis 0,7 beträgt. Dadurch wird die Bildung einer Rotationsströmung begünstigt und zudem ein ausreichender Austausch von fließfähigem Medium in an die Stange angrenzenden Bereichen der Kavität gewährleistet. Das Verhältnis ist insbesondere größer als 0,7, vorzugsweise größer als 0,9.

Aufgrund des besonders günstigen Einströmens des fließfähigen Mediums durch die Kanalabschnitte bzw. den Kanalabschnitt kann die radiale Erstreckung des Ausgleichsabschnitts im Verhältnis zu den Abmessungen der Kavität besonders groß gestaltet werden und dennoch die unvorteilhafte Bildung von Toträumen, insbesondere in Bereichen der Kavität auf der der Ausgabeöffnung abgewandten Seite des Ausgleichsabschnitts, vermieden werden. Da sich eine große radiale Erstreckung des Ausgleichsabschnitts vorteilhaft auf die Langzeitstabilität der Balgdichtung auswirkt, da die Verformung der Balgdichtung im Wesentlichen in diesem Bereich erfolgt, ist in einer vorteilhaften Weiterbildung der Vorrichtung vorgesehen, dass ein radial äußerer Bereich des Ausgleichsabschnitts eine Erstreckung aufweist, wobei die Kavität in der Ebene dieser Erstreckung eine Abmessung aufweist, wobei ein Verhältnis der Erstreckung zu der Abmessung bei einer Stellung der Stange, bei der dieses Verhältnis maximal ist, 0,3 bis 0,98, bevorzugt 0,3 bis 0,95, vorzugsweise 0,8 bis 0,95, insbesondere 0,85 bis 0,9 beträgt. Vorzugsweise ist das Verhältnis maximal, wenn sich die Stange in der zweiten Endstellung befindet.

Um Platz zu sparen, ist es günstig, wenn das Verhältnis möglichst groß ist. Um einen ausreichenden Volumenstrom des fließfähigen Mediums bei geringem Druckverlust zu erreichen, ist es günstig, wenn das Verhältnis möglichst klein ist. Die oben genannten Verhältnisse haben sich in Hinblick auf einen Kompromiss zwischen den beiden vorgenannten Kriterien als besonders vorteilhaft erwiesen.

Als besonders vorteilhaft wird es angesehen, wenn der zweite Abschnitt als Flansch ausgebildet ist, wobei der Flansch klemmend in dem Gehäuse der Vorrichtung gelagert ist.

In diesem Zusammenhang wird es als besonders vorteilhaft angesehen, wenn der Flansch mittels einer Buchse klemmend in dem Gehäuse gelagert ist.

Vorzugsweise ist die Buchse auf einer der Ausgabeöffnung abgewandten Seite des Flansches angeordnet.

Als besonders vorteilhaft wird es angesehen, wenn die Stange die Buchse durchsetzt, insofern die Buchse zumindest einen Teilbereich des Lagerabschnitts bildet. In diesem Zusammenhang wird es als vorteilhaft angesehen, wenn die Buchse radial innen eine Führungsfläche zur axialen Führung der Stange aufweist.

Hinsichtlich einer besonders einfachen Fertigung und Montage der Vorrichtung ist in einer vorteilhaften Weiterbildung vorgesehen, dass die Vorrichtung einen Grundkörperabschnitt und einen Kopfabschnitt aufweist, wobei der Kopfabschnitt in dem Grundkörperabschnitt gelagert ist.

Vorzugsweise weist der Kopfabschnitt die Ausgabeöffnung auf.

Vorzugsweise ist der Kanal oder der jeweilige Kanal in dem Grundkörperabschnitt ausgebildet.

Wenn zumindest zwei Kanäle vorhanden sind, wird es als vorteilhaft angesehen wenn die Kanalabschnitte unterschiedlich in ihrem Querschnitt sind und/oder unterschiedlich in ihrem Winkel zu der axialen Richtung sind und/oder unterschiedlich in ihrer axialen Position sind und/oder die Kreisdurchmesser der zugehörigen Kreise unterschiedlich sind.

Es ist durchaus denkbar, dass Kanalabschnitte in der axialen Richtung unterhalb und oberhalb des Ausgleichsabschnitts oder des jeweiligen Ausgleichsabschnitts ausgebildet sind.

Jeder der Kanalabschnitt kann unterschiedliche Geometriemerkmale aufweisen.

### Figurenbeschreibung

In den nachfolgenden Figuren ist die Erfindung anhand eines Ausführungsbeispiels dargestellt, ohne hierauf beschränkt zu sein.

Es zeigen:
- Fig. 1: eine Vorrichtung zum Ausgeben eines fließfähigen Mediums, in einer Schnittansicht, entlang der Linie I-I in Fig. 2,
- Fig. 2: die Vorrichtung in einer Schnittansicht entlang der Linie II-II in Fig. 1.

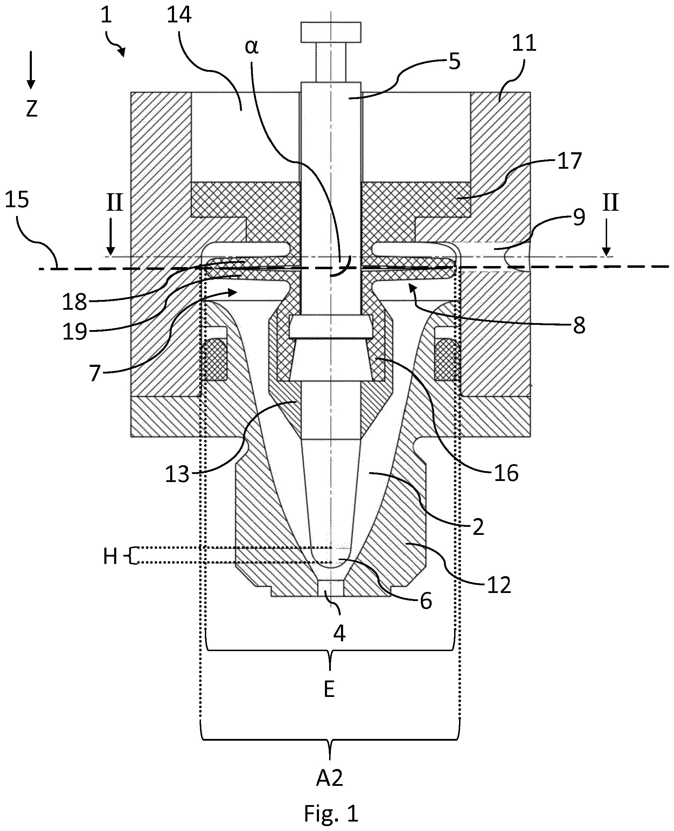

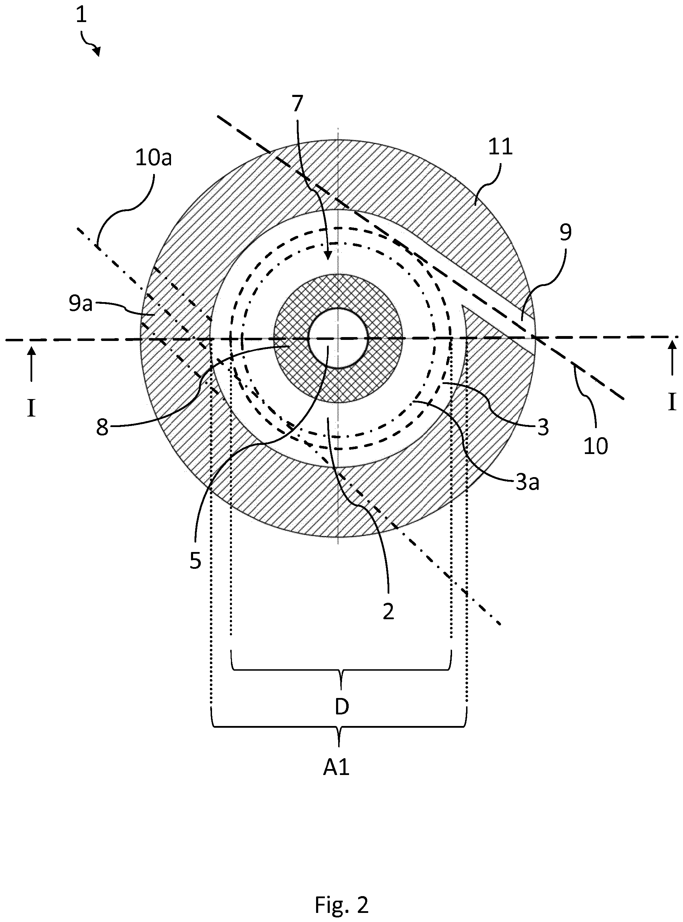

Die in den Fig. 1 und 2 gezeigte Vorrichtung 1 dient dem Ausgeben eines fließfähigen Mediums, vorliegend dem Ausgeben eines Schmelzklebstoffs. Die Vorrichtung 1 weist einen Kopfabschnitt 12 und einen Grundkörperabschnitt 11 auf, wobei der Kopfabschnitt 12 in den Grundkörperabschnitt 11 eingesetzt und mit dem Grundkörperabschnitt 11 verbunden ist.

Die Vorrichtung 1 weist eine Kavität 2 zur Aufnahme des fließfähigen Mediums auf. Die Kavität 2 ist vorliegend zwischen dem Kopfabschnitt 12 und dem Grundkörperabschnitt 11 ausgebildet.

Der Kopfabschnitt 12 weist eine in die Kavität 2 mündende Ausgabeöffnung 4 auf, wobei die Ausgabeöffnung 4 dem Ausgeben des fließfähigen Mediums dient.

Der Kopfabschnitt 12 und der Grundkörperabschnitt 11 bilden vorliegend Teilbereiche des Gehäuses der Vorrichtung 1.

In einem Lagerabschnitt 14 des Gehäuses ist eine Stange 5 gelagert, wobei die Stange 5 mittels eines nicht dargestellten Aktuators zwischen einer ersten Endstellung und einer zweiten Endstellung in einer axialen Richtung Z und umgekehrt bewegbar ist. Die Stange 5 weist einen Dichtabschnitt 6 auf, wobei der Dichtabschnitt 6 in der ersten Endstellung die Ausgabeöffnung 4 verschließt und in der zweiten Endstellung beabstandet von der Ausgabeöffnung 4 angeordnet ist. Die Fig. 1 zeigt die Stange 5 in der zweiten Endstellung.

Der Hubweg H, das heißt der axiale Abstand zwischen der ersten Endstellung und der zweiten Endstellung der Stange 5, liegt vorzugsweise im Bereich von 0,05 mm bis 10 mm, insbesondere im Bereich von 0,05 mm bis 1 mm.

Bei dem Aktuator kann es sich beispielsweise um einen Pneumatikzylinder, einen elektromechanischen Antrieb oder einen elektropneumatischen Antrieb handeln.

Die Vorrichtung 1 weist ferner eine Balgdichtung 7 zur Abdichtung des Lagerabschnitts 14 gegen die Kavität 2 auf, wobei die Stange 5 die Balgdichtung 7 durchsetzt. Die Balgdichtung 7 ist abgedichtet an der Stange 5 und abgedichtet an dem Gehäuse gelagert, wobei ein erster Abschnitt 16 der Balgdichtung 7 bezüglich der Stange 5 ortsfest mit der Stange 5 verbunden ist und wobei ein zweiter Abschnitt 17 der Balgdichtung 7 bezüglich des Gehäuses ortsfest mit dem Gehäuse verbunden ist.

Hinsichtlich der Lagerung des ersten Abschnitts 16 in der Stange 5 weist die Stange 5 einen radialen Vorsprung auf, wobei der erste Abschnitt 16 der Balgdichtung 7 klemmend zwischen diesem radialen Vorsprung und einem mit der Stange 5 verbundenen Klemmelement in Form einer Quetschhülse 13 gehalten ist und auf diese Weise sowohl formschlüssig als auch kraftschlüssig mit der Stange 5 verbunden ist.

Der zweite Abschnitt 17 der Balgdichtung 7 ist als Flansch ausgebildet, wobei der Flansch mittels einer Buchse klemmend in dem Gehäuse gelagert ist, wobei die Buchse auf einer der Ausgabeöffnung 4 abgewandten Seite des Flansches angeordnet ist, wobei die Stange 5 die Buchse durchsetzt. Die Buchse weist radial innen Führungsflächen zur axialen Führung der Stange 5 auf und bildet insofern einen Teilbereich des Lagerabschnitts 14.

Durch diese ortsfeste Lagerung der Balgdichtung 7 an der Stange 5 und dem Gehäuse bildet die Balgdichtung 7 eine statische Dichtung.

Um die Relativbewegung der Stange 5 zu dem Gehäuse auszugleichen, weist die Balgdichtung 7 einen Ausgleichsabschnitt 8 zum Ausgleichen einer axialen Stauchung oder Streckung der Balgdichtung 7 in Folge der Bewegung der Stange 5 auf. Dieser Ausgleichsabschnitt 8 steht radial gegenüber angrenzenden Bereichen der Balgdichtung 7 hervor.

Vorliegend ist die Balgdichtung 7 als Faltenbalgdichtung mit genau einer Falte, welche zwei Faltenabschnitte 18, 19 aufweist, ausgebildet, wobei diese Falte den Ausgleichsabschnitt 8 bildet.

Die Vorrichtung 1, konkret der Grundkörperabschnitt 11, weist einen in die Kavität 2 mündenden Kanal auf, durch den das fließfähige Medium in die Kavität 2 einströmen kann.

Der Kanal ist dabei derart gestaltet, dass eine Projektion einer Mittelachse 10 eines in die Kavität 2 mündenden Kanalabschnitts 9 des Kanals auf eine senkrecht zu der axialen Richtung Z ausgebildete Projektionsebene eine Kreistangente eines konzentrisch zu der Stange 5 ausgebildeten Kreises 3 bildet. Dies ist insbesondere der Fig. 2 zu entnehmen.

Es ist durchaus denkbar, dass die Vorrichtung 1 mehrere in die Kavität 2 mündende Kanäle aufweist, durch die das fließfähige Medium in die Kavität 2 einströmen kann, wobei eine Projektion der Mittelachse 10, 10a des in die Kavität 2 mündenden Kanalabschnitts 9, 9a des jeweiligen Kanals auf die senkrecht zu der axialen Richtung Z ausgebildete Projektionsebene eine Kreistangente eines konzentrisch zu der Stange 5 ausgebildeten Kreises 3, 3a bildet. Zwecks Veranschaulichung ist ein derartiger weiterer Kanal mit einem derartigen Kanalabschnitt 9a sowie die entsprechende Mittelachse 10a und der entsprechende Kreis 3a als strichpunktierte Linie in der Fig. 2 veranschaulicht.

Zumindest ein Teilbereich des Kanalabschnitts 9 ist auf einer der Ausgabeöffnung 4 abgewandten Seite einer durch einen radial äußeren Bereich des Ausgleichsabschnitts 8 gebildeten Ebene 15 ausgebildet. Somit wird ein Einströmen des fließfähigen Mediums in den Bereich der Kavität 2, der auf einer der Ausgabeöffnung 4 abgewandten Seite des Ausgleichsabschnitts 8 ausgebildet ist, begünstigt.

Die Mittelachse 10 des Kanalabschnitts 9 verläuft gewinkelt zu der axialen Richtung Z, wobei ein zwischen der Mittelachse 10 und der axialen Richtung Z eingeschlossener Winkel α vorliegend 90° beträgt.

Wie den Figuren zu entnehmen ist, ist der Kanal vorliegend geradlinig ausgebildet. Es ist aber auch durchaus denkbar, dass der Kanal gewinkelt oder gekrümmt ausgebildet ist.

Die Balgdichtung 7 ist rotationssymmetrisch ausgebildet und besteht vorliegend aus einem Thermoplast.

Die Kavität 2 ist zu einer durch die Stange 5 verlaufenden Achse rotationssymmetrisch ausgestaltet

Der Kreis 3 weist einen Durchmesser D auf, wobei die Kavität 2 in der Projektionsebene eine Abmessung A1 aufweist, wobei ein Verhältnis des Durchmessers D des Kreises zu der Abmessung A1 vorliegend ungefähr 0,86 beträgt (*^{D}*/*_{A1}* ≈ 0,86).

Ein radial äußerer Bereich des Ausgleichsabschnitts 8 weist eine Erstreckung E auf, wobei die Kavität 2 in der Ebene dieser Erstreckung E eine Abmessung A2 aufweist, wobei ein Verhältnis der Erstreckung E zu der Abmessung A2 bei einer Stellung der Stange 5, bei der dieses Verhältnis maximal ist, vorliegend in der zweiten Endstellung, etwa 0,96 beträgt (*^{E}*/*_{A2}* ≈ 0,96).

Vorliegend ist die Abmessung A1 identisch mit der Abmessung A2.

Die Vorrichtung 1 ist geeignet für ein fließfähiges Medium in der Kavität 2 mit einem Druck von 0 bar bis 120 bar, insbesondere 80 bar bis 120 bar.

Ferner ist die Vorrichtung 1, insbesondere die Balgdichtung 7, geeignet für fließfähige Medien in einem Temperaturbereich von 0°C bis 220°C.

Ferner können mit der vorgenannten Vorrichtung 1 Schaltfrequenzen von 0 Hz bis 150 Hz erreicht werden.

Die Vorrichtung 1 gemäß der Erfindung hat sich bei der Verwendung eines Schmelzklebstoffs als fließfähiges Medium als besonders verschleißarm, wartungsarm und dauerbeständig erwiesen.

Die Vorrichtung 1 kann neben der Anwendung zum Ausgeben eines Schmelzklebstoffs durch geringe bauliche Abwandlungen auch zu Regelzwecken verwendet werden. Die Vorrichtung 1 kann durch geringe bauliche Abwandlungen beispielsweise als Druckregelventil oder als Drossel verwendet werden.

Bei einer Verwendung als Drossel oder als Druckregelventil bleibt während laufendem Betrieb die Ausgabeöffnung 4 dauernd geöffnet, insofern befindet sich die Stange 5 außerhalb der ersten Endstellung. Der axiale Abstand zur ersten Endstellung wird dabei entweder laufend geregelt um einen Druck zu begrenzen oder zu regeln oder der Abstand bleibt konstant für eine Drosselfunktion.

Die Vorrichtung 1 kann auch zur Begrenzung von einem Druck dienen und insofern ein Sicherheitselement sein, das im Normalfall geschlossen ist, sich somit die Stange 5 in der ersten Endstellung befindet, und sehr selten die Funktion der Druckbegrenzung ausübt, indem die Stange 5 in eine Stellung übergeht, die nicht der ersten Endstellung entspricht.

### Bezugszeichenliste

- 1: Vorrichtung
- 2: Kavität
- 3: Kreis
- 3a: Kreis
- 4: Ausgabeöffnung
- 5: Stange
- 6: Dichtabschnitt
- 7: Balgdichtung
- 8: Ausgleichsabschnitt
- 9: Kanalabschnitt
- 9a: Kanalabschnitt
- 10: Mittelachse
- 10a: Mittelachse
- 11: Grundkörperabschnitt
- 12: Kopfabschnitt
- 13: Quetschhülse
- 14: Lagerabschnitt
- 15: Ebene
- 16: erster Abschnitt
- 17: zweiter Abschnitt
- 18: Faltenabschnitt
- 19: Faltenabschnitt

- Z: axiale Richtung
- A1: Abmessung
- A2: Abmessung
- D: Durchmesser
- E: Erstreckung
- H: Hubweg

## Patentansprüche

1. Vorrichtung (1) zum Ausgeben eines fließfähigen Mediums, insbesondere zum Ausgeben eines Klebstoffs, vorzugsweise zum Ausgeben eines Schmelzklebstoffs, aufweisend:
- ein Gehäuse mit einer Kavität (2) zur Aufnahme des fließfähigen Mediums,
- eine in einem Lagerabschnitt (14) des Gehäuses gelagerte Stange (5), wobei die Stange (5) mittels eines Aktuators zwischen einer ersten Endstellung und einer zweiten Endstellung in einer axialen Richtung (Z) und umgekehrt bewegbar ist,
- eine in die Kavität (2) mündende Ausgabeöffnung (4) zum Ausgeben des fließfähigen Mediums, wobei die Stange (5) einen Dichtabschnitt (6) aufweist, wobei der Dichtabschnitt (6) in der ersten Endstellung die Ausgabeöffnung (4) verschließt und in der zweiten Endstellung beabstandet von der Ausgabeöffnung (4) angeordnet ist,
- eine Balgdichtung (7) zur Abdichtung des Lagerabschnitts (14) gegen die Kavität (2), wobei die Stange (5) die Balgdichtung (7) durchsetzt, wobei die Balgdichtung (7) abgedichtet an der Stange (5) und abgedichtet an dem Gehäuse gelagert ist, wobei ein erster Abschnitt (16) der Balgdichtung (7) bezüglich der Stange (5) ortsfest mit der Stange (5) verbunden ist und ein zweiter Abschnitt (17) der Balgdichtung (7) bezüglich des Gehäuses ortsfest mit dem Gehäuse verbunden ist, wobei die Balgdichtung (7) zumindest einen Ausgleichsabschnitt (8) zum Ausgleichen einer axialen Stauchung oder Streckung der Balgdichtung (7) aufweist, wobei der Ausgleichsabschnitt (8) radial gegenüber angrenzenden Bereichen der Balgdichtung (7) hervorsteht,
- zumindest einen in die Kavität (2) mündenden Kanal durch den das fließfähige Medium in die Kavität (2) einströmen kann,
**dadurch gekennzeichnet, dass** eine Projektion einer Mittelachse (10, 10a) eines in die Kavität (2) mündenden Kanalabschnitts (9, 9a) des zumindest einen Kanals auf eine senkrecht zu der axialen Richtung (Z) ausgebildeten Projektionsebene eine Kreistangente eines konzentrisch zu der Stange (5) ausgebildeten Kreises (3, 3a) bildet.

2. Vorrichtung (1) nach Anspruch 1, wobei die Balgdichtung (7) eine Faltenbalgdichtung ist und eine Falte der Faltenbalgdichtung den Ausgleichsabschnitt (8) bildet.

3. Vorrichtung (1) nach Anspruch 1 oder 2, wobei die Vorrichtung (1) mehrere in die Kavität (2) mündende Kanäle aufweist durch die das fließfähige Medium in die Kavität (2) einströmen kann, wobei eine Projektion der Mittelachse (10, 10a) des in die Kavität (2) mündenden Kanalabschnitts (9, 9a) des jeweiligen Kanals auf die senkrecht zu der axialen Richtung (Z) ausgebildete Projektionsebene eine Kreistangente eines konzentrisch zu der Stange (5) ausgebildeten Kreises (3, 3a) bildet.

4. Vorrichtung (1) nach einem der Ansprüche 1 bis 3, wobei zumindest ein Teilbereich des Kanalabschnitts (9, 9a) oder des jeweiligen Kanalabschnitts (9, 9a) auf einer der Ausgabeöffnung (4) abgewandten Seite einer durch einen radial äußeren Bereich des Ausgleichsabschnitts (8) gebildeten Ebene (15) ausgebildet ist.

5. Vorrichtung (1) nach einem der Ansprüche 1 bis 4, wobei die Mittelachse (10, 10a) des Kanalabschnitts (9, 9a) oder des jeweiligen Kanalabschnitts (9, 9a) gewinkelt zu der axialen Richtung (Z) verläuft, wobei ein zwischen der Mittelachse (10, 10a) und der axialen Richtung (Z) eingeschlossener Winkel (a) 70° bis 110° beträgt, vorzugsweise 85° bis 95° beträgt, insbesondere 90° beträgt.

6. Vorrichtung (1) nach einem der Ansprüche 1 bis 5, wobei der Kanalabschnitt (9, 9a) oder der jeweilige Kanalabschnitt (9, 9a) einen kreisförmigen Querschnitt aufweist.

7. Vorrichtung (1) nach einem der Ansprüche 1 bis 6, wobei der Kanal oder der jeweilige Kanal geradlinig ausgebildet ist.

8. Vorrichtung (1) nach einem der Ansprüche 1 bis 7, wobei die Balgdichtung (7) rotationssymmetrisch ausgebildet ist.

9. Vorrichtung (1) nach einem der Ansprüche 1 bis 8, wobei die Balgdichtung (7) einen Thermoplast aufweist, insbesondere aus einem Thermoplast besteht.

10. Vorrichtung nach einem der Ansprüche 1 bis 9, wobei der Kreis (3, 3a) oder der jeweilige Kreis (3, 3a) einen Durchmesser (D) aufweist, wobei die Kavität (2) in der Projektionsebene eine Abmessung (A1) aufweist, wobei ein Verhältnis des Durchmessers (D) des Kreises (3, 3a) zu der Abmessung (A1) 0,2 bis 0,99, vorzugsweise 0,3 bis 0,9, bevorzugt 0,4 bis 0,8, insbesondere 0,5 bis 0,7 beträgt.

11. Vorrichtung nach einem der Ansprüche 1 bis 10, wobei ein radial äußerer Bereich des Ausgleichsabschnitts (8) eine Erstreckung (E) aufweist, wobei die Kavität (2) in der Ebene dieser Erstreckung (E) eine Abmessung (A2) aufweist, wobei ein Verhältnis der Erstreckung (E) zu der Abmessung (A2) bei einer Stellung der Stange (5), bei der dieses Verhältnis maximal ist, 0,3 bis 0,98, vorzugsweise 0,3 bis 0,95, bevorzugt 0,8 bis 0,95, insbesondere 0,85 bis 0,9 beträgt.

12. Vorrichtung (1) nach einem der Ansprüche 1 bis 11, wobei der erste Abschnitt (16) der Balgdichtung (7) klemmend in der Stange (5) gehalten ist.

13. Vorrichtung (1) nach einem der Ansprüche 1 bis 12, wobei der zweite Abschnitt (17) als Flansch ausgebildet, wobei der Flansch klemmend in dem Gehäuse der Vorrichtung (1) gelagert ist.

14. Vorrichtung nach Anspruch 13, wobei der Flansch mittels einer Buchse klemmend in dem Gehäuse gelagert ist.

15. Vorrichtung (1) nach einem der Ansprüche 1 bis 14, wobei die Vorrichtung (1) einen Grundkörperabschnitt (11) und einen Kopfabschnitt (12) aufweist, wobei der Kopfabschnitt (12) die Ausgabeöffnung (4) aufweist, wobei der Kopfabschnitt (12) in dem Grundkörperabschnitt (11) gelagert ist, wobei der Kanal oder der jeweilige Kanal in dem Grundkörperabschnitt (11) ausgebildet ist.

## Claims

1. Device (1) for dispensing a flowable medium, in particular for dispensing an adhesive, preferably for dispensing a hot melt adhesive, having:
- a housing with a cavity (2) for receiving the flowable medium,
- a rod (5) which is mounted in a bearing section (14) of the housing, wherein the rod (5) can be moved by means of an actuator between a first end position and a second end position in an axial direction (Z) and vice versa,
- a dispensing opening (4) which opens out into the cavity (2) and which serves for dispensing the flowable medium, wherein the rod (5) has a sealing section (6), wherein the sealing section (6) closes off the dispensing opening (4) in the first end position and is arranged spaced apart from the dispensing opening (4) in the second end position,
- a bellows seal (7) for sealing off the bearing section (14) with respect to the cavity (2), wherein the rod (5) passes through the bellows seal (7), wherein the bellows seal (7) is mounted in a sealed-off manner on the rod (5) and in a sealed-off manner on the housing, wherein a first section (16) of the bellows seal (7) is connected to the rod (5) so as to be positionally fixed with respect to the rod (5) and a second section (17) of the bellows seal (7) is connected to the housing so as to be positionally fixed with respect to the housing, wherein the bellows seal (7) has at least one compensating section (8) for compensating an axial compression or stretching of the bellows seal (7), wherein the compensating section (8) protrudes radially in relation to adjoining regions of the bellows seal (7),
- at least one channel which opens out into the cavity (2) and through which the flowable medium can flow into the cavity (2),
**characterized in that** a projection of a central axis (10, 10a) of a channel section (9, 9a), opening out into the cavity (2), of the at least one channel onto a projection plane which is perpendicular to the axial direction (Z) forms a tangent to a circle (3, 3a) which is concentric with the rod (5).

2. Device (1) according to Claim 1, wherein the bellows seal (7) is a corrugated bellows seal and a fold of the corrugated bellows seal forms the compensating section (8).

3. Device (1) according to Claim 1 or 2, wherein the device (1) has multiple channels which open out into the cavity (2) and through which the flowable medium can flow into the cavity (2), wherein a projection of the central axis (10, 10a) of the channel section (9, 9a), opening out into the cavity (2), of the respective channel onto the projection plane which is perpendicular to the axial direction (Z) forms a tangent to a circle (3, 3a) which is concentric with the rod (5).

4. Device (1) according to one of Claims 1 to 3, wherein at least a sub-region of the channel section (9, 9a) or of the respective channel section (9, 9a) is formed on a side, facing away from the dispensing opening (4), of a plane (15) which is formed by a radially outer region of the compensating section (8) .

5. Device (1) according to one of Claims 1 to 4, wherein the central axis (10, 10a) of the channel section (9, 9a) or of the respective channel section (9, 9a) is at an angle to the axial direction (Z), wherein an angle (α) included between the central axis (10, 10a) and the axial direction (Z) is 70° to 110°, preferably is 85° to 95°, in particular is 90°.

6. Device (1) according to one of Claims 1 to 5, wherein the channel section (9, 9a) or the respective channel section (9, 9a) has a circular cross section.

7. Device (1) according to one of Claims 1 to 6, wherein the channel or the respective channel is of rectilinear form.

8. Device (1) according to one of Claims 1 to 7, wherein the bellows seal (7) is of rotationally symmetrical form.

9. Device (1) according to one of Claims 1 to 8, wherein the bellows seal (7) comprises a thermoplastic, in particular consists of a thermoplastic.

10. Device (1) according to one of Claims 1 to 9, wherein the circle (3, 3a) or the respective circle (3, 3a) has a diameter (D), wherein the cavity (2) has a dimension (A1) in the projection plane, wherein a ratio of the diameter (D) of the circle (3, 3a) to the dimension (A1) is 0.2 to 0.99, preferably 0.3 to 0.9, preferably 0.4 to 0.8, in particular 0.5 to 0.7.

11. Device (1) according to one of Claims 1 to 10, wherein a radially outer region of the compensating section (8) has an extent (E), wherein the cavity (2) has a dimension (A2) in the plane of said extent (E), wherein a ratio of the extent (E) to the dimension (A2) for a position of the rod (5) in which said ratio is maximal is 0.3 to 0.98, preferably 0.3 to 0.95, preferably 0.8 to 0.95, in particular 0.85 to 0.9.

12. Device (1) according to one of Claims 1 to 11, wherein the first section (16) of the bellows seal (7) is held in a clamping manner in the rod (5).

13. Device (1) according to one of Claims 1 to 12, wherein the second section (17) is in the form of a flange, wherein the flange is mounted in a clamping manner in the housing of the device (1).

14. Device according to Claim 13, wherein the flange is mounted in a clamping manner in the housing by means of a bushing.

15. Device (1) according to one of Claims 1 to 14, wherein the device (1) has a main body section (11) and a head section (12), wherein the head section (12) has the dispensing opening (4), wherein the head section (12) is mounted in the main body section (11), wherein the channel or the respective channel is formed in the main body section (11).

## Revendications

1. Dispositif (1) pour la distribution d'un milieu fluide, notamment pour la distribution d'un adhésif, de préférence pour la distribution d'un adhésif thermofusible, comprenant :
- un boîtier muni d'une cavité (2) pour la réception du milieu fluide,
- une tige (5) montée dans une section de montage (14) du boîtier, la tige (5) étant mobile au moyen d'un actionneur entre une première position d'extrémité et une deuxième position d'extrémité dans une direction axiale (Z) et inversement,
- une ouverture de distribution (4) débouchant dans la cavité (2) pour la distribution du milieu fluide, la tige (5) comprenant une section d'étanchéité (6), la section d'étanchéité (6) fermant l'ouverture de distribution (4) dans la première position d'extrémité et étant agencée à distance de l'ouverture de distribution (4) dans la deuxième position d'extrémité,
- un joint d'étanchéité à soufflet (7) pour l'étanchéification de la section de montage (14) vis-à-vis de la cavité (2), la tige (5) traversant le joint d'étanchéité à soufflet (7), le joint d'étanchéité à soufflet (7) étant monté de manière étanchéifiée au niveau de la tige (5) et de manière étanchéifiée au niveau du boîtier, une première section (16) du joint d'étanchéité à soufflet (7) étant reliée à la tige (5) de manière fixe par rapport à la tige (5) et une deuxième section (17) du joint d'étanchéité à soufflet (7) étant reliée au boîtier de manière fixe par rapport au boîtier, le joint d'étanchéité à soufflet (7) comprenant au moins une section de compensation (8) pour la compensation d'une compression ou d'un étirement axial du joint d'étanchéité à soufflet (7), la section de compensation (8) faisant saillie radialement par rapport à des zones adjacentes du joint d'étanchéité à soufflet (7),
- au moins un canal débouchant dans la cavité (2), à travers lequel le milieu fluide peut s'écouler dans la cavité (2),
**caractérisé en ce qu'**une projection d'un axe médian (10, 10a) d'une section de canal (9, 9a), débouchant dans la cavité (2), de l'au moins un canal forme sur un plan de projection formé perpendiculairement à la direction axiale (Z) une tangente de cercle d'un cercle (3, 3a) formé concentriquement à la tige (5).

2. Dispositif (1) selon la revendication 1, dans lequel le joint d'étanchéité à soufflet (7) est un joint d'étanchéité à soufflet à pli et un pli du joint d'étanchéité à soufflet à pli forme la section de compensation (8).

3. Dispositif (1) selon la revendication 1 ou 2, dans lequel le dispositif (1) comprend plusieurs canaux débouchant dans la cavité (2) à travers lesquels le milieu fluide peut s'écouler dans la cavité (2), une projection de l'axe médian (10, 10a) de la section de canal (9, 9a), débouchant dans la cavité (2), du canal respectif sur le plan de projection formé perpendiculairement à la direction axiale (Z) formant une tangente de cercle d'un cercle (3, 3a) formé concentriquement à la tige (5).

4. Dispositif (1) selon l'une quelconque des revendications 1 à 3, dans lequel au moins une zone partielle de la section de canal (9, 9a) ou de la section de canal respective (9, 9a) est formée sur un côté détourné de l'ouverture de distribution (4) d'un plan (15) formé par une zone radialement extérieure de la section de compensation (8).

5. Dispositif (1) selon l'une quelconque des revendications 1 à 4, dans lequel l'axe médian (10, 10a) de la section de canal (9, 9a) ou de la section de canal respective (9, 9a) s'étend à un angle par rapport à la direction axiale (Z), un angle (α) compris entre l'axe médian (10, 10a) et la direction axiale (Z) étant de 70° à 110°, de préférence de 85° à 95°, notamment de 90°.

6. Dispositif (1) selon l'une quelconque des revendications 1 à 5, dans lequel la section de canal (9, 9a) ou la section de canal respective (9, 9a) présente une section transversale de forme circulaire.

7. Dispositif (1) selon l'une quelconque des revendications 1 à 6, dans lequel le canal ou le canal respectif est configuré sous forme rectiligne.

8. Dispositif (1) selon l'une quelconque des revendications 1 à 7, dans lequel le joint d'étanchéité à soufflet (7) est configuré sous forme symétrique par rotation.

9. Dispositif (1) selon l'une quelconque des revendications 1 à 8, dans lequel le joint d'étanchéité à soufflet (7) comprend un thermoplastique, notamment est constitué d'un thermoplastique.

10. Dispositif selon l'une quelconque des revendications 1 à 9, dans lequel le cercle (3, 3a) ou le cercle respectif (3, 3a) présente un diamètre (D), la cavité (2) présentant dans le plan de projection une dimension (A1), un rapport du diamètre (D) du cercle (3, 3a) à la dimension (A1) étant de 0,2 à 0,99, de préférence de 0,3 à 0,9, avantageusement de 0,4 à 0,8, notamment de 0,5 à 0,7.

11. Dispositif selon l'une quelconque des revendications 1 à 10, dans lequel une zone radialement extérieure de la section de compensation (8) présente une étendue (E), la cavité (2) présentant dans le plan de cette étendue (E) une dimension (A2), un rapport de l'étendue (E) à la dimension (A2) à une position de la tige (5) à laquelle ce rapport est maximal étant de 0,3 à 0,98, de préférence de 0,3 à 0,95, avantageusement de 0,8 à 0,95, notamment de 0,85 à 0,9.

12. Dispositif (1) selon l'une quelconque des revendications 1 à 11, dans lequel la première section (16) du joint d'étanchéité à soufflet (7) est maintenue par serrage dans la tige (5).

13. Dispositif (1) selon l'une quelconque des revendications 1 à 12, dans lequel la deuxième section (17) est configurée sous la forme d'une bride, la bride étant montée par serrage dans le boîtier du dispositif (1) .

14. Dispositif selon la revendication 13, dans lequel la bride est montée par serrage dans le boîtier au moyen d'une douille.

15. Dispositif (1) selon l'une quelconque des revendications 1 à 14, dans lequel le dispositif (1) comprend une section de corps de base (11) et une section de tête (12), la section de tête (12) comprenant l'ouverture de distribution (4), la section de tête (12) étant montée dans la section de corps de base (11), le canal ou le canal respectif étant formé dans la section de corps de base (11).
